# EUROPÄISCHE PATENTSCHRIFT

(11) **EP 0 372 167 B1**
(45) Veröffentlichungstag und Bekanntmachung des Hinweises auf die Patenterteilung: **04.08.1993**
(21) Anmeldenummer: 89115147.4
(22) Anmeldetag: 17.08.1989
(51) Int. Cl.: F16F 13/00

(54) **Elastisches Gummilager**
Elastic rubber mounting
Support élastique en caoutchouc

(30) Priorität: 07.12.1988 DE 3841194
(43) Veröffentlichungstag der Anmeldung: 13.06.1990
(73) Patentinhaber: Boge GmbH, D-53783 Eitorf (DE)
(72) Erfinder: Frühauf, Frank, Dr., D-5208 Eitorf (DE); Mayerböck, Wilhelm, D-5483 Kirchdaun (DE); Quast, Jörn-Rainer, D-8485 Sinzig/Bad-Bodendorf (DE)

(56) Entgegenhaltungen:
- FR-A- 2 212 012
- FR-A- 2 218 508
- FR-A- 2 554 889
- GB-A- 2 137 310
- US-A- 3 747 914

## Beschreibung

Die Erfindung bezieht sich auf ein elastisches Gummilager bestehend aus einem Innenteil, einem dazu mit Abstand angeordneten Außenteil und dazwischen fest eingesetzten Gummiteil, welches zusammen mit dem Innenteil und dem Außenteil einen Hohlraum bildet, der mit Flüssigkeit gefüllt ist, wobei die Kraftübertragung zwischen dem Innenteil und dem Außenteil überwiegend durch die Flüssigkeit erfolgt.

Es sind elastische Lager bekannt (z.B. US-PS 2.562.195), bei denen die ringförmigen Hohlräume von einem im Querschnitt winkelförmigen äußeren Ring und einem inneren Ring aus Elastomermaterial begrenzt werden, wobei der innere Ring beider Hohlräume als ein gemeinsamer Ring ausgebildet ist. Zusätzlich jedoch begrenzt aber auch die Buchse und das Tragelement die Hohlräume, so daß insgesamt eine Einheit vorhanden ist, die in zwei Kammern unterteilt ist. Nachteilig ist jedoch, daß dieses Lager axial statisch nur wenig belastbar ist. In radialer Richtung ist ebenfalls nur ein relativ kleiner Federweg möglich.

Darüber hinaus sind flüssigkeitsgefüllte Gummilager bekannt (z.B. FR-A 2.218.508), bei denen die Metall- und Gummiteile zur axialen Kraftaufnahme als Kolben-Zylinder ausgebildet sind. Die Arbeitskammer ist mit Flüssigkeit gefüllt, so daß bei Ausführung einer Hubbewegung das verdrängte Flüssigkeitsvolumen durch Ausweichen der Gummiwandung konstant gehalten werden kann. Geringe Rückstellmomente bei kardanischen Bewegungen sind kaum zu realisieren.

Aufgabe der Erfindung ist es, ein elastisches Gummilager so auszubilden, das axial auf Zug und/oder Druck belastbar ist und das kardanische Bewegungen bei sehr geringen Rückstellmomenten zuläßt.

Zur Lösung dieser Aufgabe ist erfindungsgemäß vorgesehen, daß das Innenteil im Bereich der Verbindung mit dem Gummiteil eine in etwa kugelförmig verlaufende Oberfläche aufweist, und daß das Außenteil im Bereich dieser Verbindung das Innenteil im Abstand umschließt, wobei in mindestens einer Druckrichtung ein Gummielement vorgesehen ist, welches am Außenteil befestigt ist und sich am Innenteil über die Flüssigkeit abstützt.

Vorteilhaft ist bei dieser Ausbildung, daß sowohl das Gummiteil als auch die Flüssigkeit mit statischen Kräften beaufschlagt werden können. Durch Verwendung einer speziellen geometrischen Form bzw. der Konstruktion des Gummiteiles kann eine entsprechende Traglast ausgelegt werden, wobei kardanische Bewegungen problemlos ausgeführt werden können. Bei diesen kardanischen Bewegungen wird das Gummiteil vorwiegend in Scherrichtung beansprucht. Das Gummiteil ist in Scherrichtung weicher als in Druckrichtung, so daß aus diesem Grund nur geringe Rückstellmomente wirken.

Nach einem weiteren wesentlichen Merkmal ist vorgesehen, daß das Gummielement ringförmig ausgebildet und bildet zusammen mit einem Metallteil und dem Außenteil eine mit Luft und/oder Gas gefüllte Kammer.

Vorteilhaft ist hierbei, daß über das Gummielement Kräfte elastisch aufgenommen werden können. Die Flüssigkeit stützt sich dabei über das Metallteil am Gummielement ab, so daß der Federweg vom Gummielement und vom Gummiteil wirksam ist.

Damit in der Kammer kein zusätzlicher Druck für bestimmte Anwendungsfälle aufgebaut wird, ist in Ausgestaltung der Erfindung die Kammer über eine Bohrung nach außen entlüftbar. Eine Druckbeaufschlagung der Kammer kann insbesondere bei hohen statischen Traglasten zur Unterstützung beitragen.

Bevorzugte Ausführungsbeispiele sind in den Zeichnungen schematisch dargestellt.

Es zeigt:
Figur 1 ein elastisches Gummilager im Schnitt
Figur 2 eine Variante des in Figur 1 dargestellten Gummilagers
Figur 3 eine Dichtungsanordnung bei zweiteiligem Außenteil.

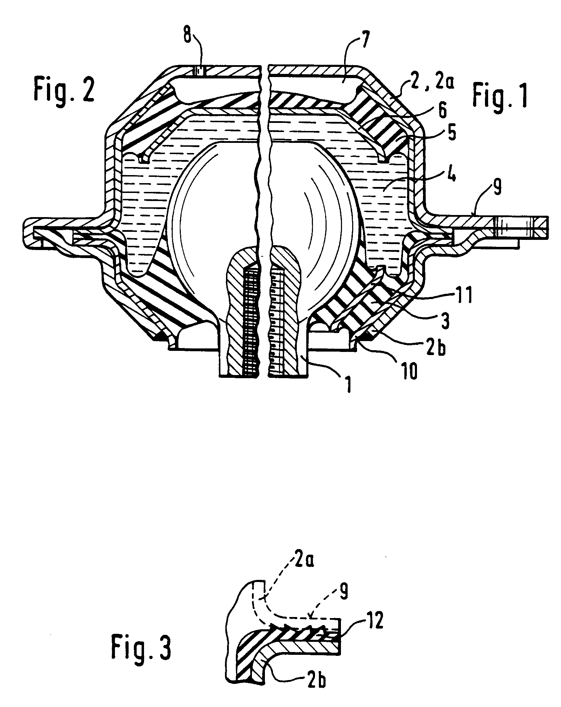

Das in Figur 1 dargestellte elastisches Gummilager besteht im wesentlichen aus dem Innenteil 1, dem Außenteil 2 und dem dazwischen eingesetztem Gummiteil 3. Das Innenteil 1, das Gummiteil 3 und das Außenteil 2 bilden einen Hohlraum 4, der mit Flüssigkeit gefüllt ist. Das Außenteil 2 besteht aus den beiden Einzelteilen 2a und 2b. Dabei ist das Gummiteil 3 am Innenteil 1 und am Außenteil 2b anvulkanisiert. Gegebenenfalls kann noch ein Zwischenblech 10 vorgesehen werden.

Das Gummiteil 3 nimmt in Zug- und Druckrichtung entsprechende Kräfte auf, während die Flüssigkeit im Hohlraum 4 der Übertragung von Druckkräften dient. Das Gummiteil 3 verläuft über den gesamten Umfang des Innenteiles 1 und des Außenteiles 2. Das Gummiteil 3 kann zusätzlich ein Armierungsteil 11 aufweisen.

Statische und dynamische Belastungen können durch das Gummielement 5 elastisch aufgefangen werden. Das Gummielement 5 ist hierzu am Außenteil 2a über ein Zwischenblech anvulkanisiert und ist mit einem Metallteil 6 versehen, so daß der Druck über eine entsprechend große Fläche des Metallteiles 6 auf das Gummielement 5 übertragen werden kann. Zwischen dem Metallteil 6 und dem Außenteil 2 befindet sich die luft- oder gasgefüllte Kammer 7.

Die Außenteile 2a und 2b bilden den Befestigungsflansch 9, in den gegebenenfalls Befestigungslöcher einbringbar sind.

In der Figur 2 ist eine Ausführungsform des in Figur 1 gezeigten Gummilagers dargestellt, mit dem Unterschied, daß die Kammer 7 nach außen zur Atmosphäre über die Bohrung 8 des Außenteiles 2 entlüftet ist, so daß sich in der Kammer 7 kein Druck aufbauen kann.

In Figur 3 ist ein Ausschnitt des Befestigungsflansches 9 dargestellt, bei dem überlaufender Gummi des Gummiteiles 3 bzw. des Gummielementes 5 eine Dichtung 12 bildet. Die Oberfläche der Dichtung 12 könnte dabei sägeformartig gestaltet werden, so daß eine einwandfreie Abdichtung der Teile 2a und 2b des Außenteiles 2 erfolgen kann.

### Bezugszeichenliste

- 1 -: Innenteil
- 2 -: Außenteil
- 3 -: Gummiteil
- 4 -: Hohlraum
- 5 -: Gummielement
- 6 -: Metallteil
- 7 -: Kammer
- 8 -: Bohrung
- 9 -: Befestigungsflansch
- 10 -: Zwischenblech
- 11 -: Armierungsteil
- 12 -: Dichtung

## Patentansprüche

1. Elastisches Gummilager bestehend aus einem Innenteil (1), einem dazu mit Abstand angeordneten Außenteil (2) und dazwischen fest eingesetzten Gummiteil (3), welches zusammen mit dem Innenteil (1) und dem Außenteil (2) einen Hohlraum (4) bildet, der mit Flüssigkeit gefüllt ist, wobei die Kraftübertragung zwischen dem Innenteil (1) und dem Außenteil (2) überwiegend durch die Flüssigkeit erfolgt,
dadurch gekennzeichnet,
daß das Innenteil (1) im Bereich der Verbindung mit dem Gummiteil (3) eine in etwa kugelförmig verlaufende Oberfläche aufweist, und daß das Außenteil (2) im Bereich dieser Verbindung das Innenteil (1) im Abstand umschließt, wobei in mindestens einer Druckrichtung ein Gummielement (5) vorgesehen ist, welches am Außenteil (2) befestigt ist und sich am Innenteil (1) über die Flüssigkeit abstützt.

2. Gummilager nach Anspruch 1,
dadurch gekennzeichnet,
daß das Gummielement (5) ringförmig ausgebildet ist und zusammen mit einem Metallteil (6) und dem Außenteil (2) eine mit Luft und/oder Gas gefüllte Kammer (7) bildet.

3. Gummilager nach Anspruch 2,
dadurch gekennzeichnet,
daß die Kammer (7) über eine Bohrung (8) nach außen entlüftbar ist.

## Claims

1. Elastic rubber mounting comprising a inner component (1), an outer component (2) arranged spaced from it and a rubber component (3) permanently inserted between them, which together with the inner component (1) and the outer component (2) forms a cavity (4) which is filled with fluid, the transmission of force between the inner component (1) and the outer component (2) taking place predominantly through the fluid,
characterised in that
the inner component (1) has in region of the junction with the rubber component (3) a roughly ball-shaped surface and that the outer component (2) embraces the inner component (1), but spaced from it, in the region of this junction, there being provided in at least one direction of compression a rubber element (5) which is secured to the outer component (2) and supports itself in relation to the inner component (1) through the fluid.

2. Rubber mounting according to claim 1,
characterised in that
the rubber element (5) is of annular form and together with a metal part (6) and the outer component (2) forms a chamber (7) filled with air and/or gas.

3. Rubber mounting according to claim 2,
characterised in that
the chamber (7) is vented to atmosphere through a hole (8).

## Revendications

1. Support élastique en caoutchouc constitué d'une partie intérieure (1), d'une partie extérieure (2) disposée à une certaine distance de celle-ci, et d'une partie en caoutchouc (3) qui est solidement insérée entre elles et qui forme, avec la partie intérieure (1) et la partie extérieure (2), un espace creux (4) qui est rempli de liquide, la transmission de la force entre la partie intérieure (1) et la partie extérieure (2) se faisant principalement par le liquide,
support caractérisé
par le fait que la partie intérieure (1) présente, dans la zone de la liaison avec la partie en caoutchouc (3), une surface de forme à peu près sphérique, et que, dans la zone de cette liaison, la partie extérieure (2) entoure la partie intérieure (1) à une certaine distance, support dans lequel, dans au moins une direction de compression, est prévu un élément de caoutchouc (5) qui est fixé à la partie extérieure (2) et s'appuie contre la partie intérieure (1) par l'intermédiaire du liquide.

2. Support en caoutchouc selon la revendication 1,
caractérisé
par le fait que l'élément de caoutchouc (5) a une forme annulaire et, avec une partie métallique (6) et la partie extérieure (2), forme une chambre (7) remplie d'air/ou de gaz.

3. Support en caoutchouc selon la revendication 2,
caractérisé,
par le fait que la chambre (7) peut être mise à l'atmosphère extérieure par l'intermédiaire d'un perçage (8).
